(19) Europäisches Patentamt
European Patent Office
Office européen des brevets

(11) **EP 2 107 083 B1**

(12) **EUROPÄISCHE PATENTSCHRIFT**

(45) Veröffentlichungstag und Bekanntmachung des Hinweises auf die Patenterteilung:
**17.07.2013 Patentblatt 2013/29**

(51) Int Cl.:
***C08L 77/02*** *(2006.01)*     ***C08L 77/06*** *(2006.01)*
***C08L 23/08*** *(2006.01)*     ***C08L 55/00*** *(2006.01)*
*C08L 23/08* *(2006.01)*     *C08L 55/00* *(2006.01)*

(21) Anmeldenummer: **09004603.8**

(22) Anmeldetag: **30.03.2009**

(54) **Polyamidformmasse für lackfreie, zähe Gehäuse mit Hochglanz-Oberfläche**

Polyamide moulding material for lacquer-free ductile housing with highly reflective surface

Masse de formage en polyamide pour boîtiers sans laque, durs et dotés d'une surface hautement brillante

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **31.03.2008 DE 102008016436**

(43) Veröffentlichungstag der Anmeldung:
**07.10.2009 Patentblatt 2009/41**

(73) Patentinhaber: **EMS-PATENT AG**
**7013 Domat/Ems (CH)**

(72) Erfinder:
• **Bühler, Friedrich Severin, Dr.rer.nat.Dipl-Chem**
**7430 Thusis (CH)**
• **Aepli, Etienne, Dipl.-Chem. HTL**
**7013 Domat/EMS (CH)**
• **Bass, Sepp, Ing. (FH)**
**7013 Domat/EMS (CH)**
• **Hala, Ralf, Dipl.-Ing. (FH)**
**88161 Lindenberg (CH)**

(74) Vertreter: **Pfenning, Meinig & Partner GbR**
**Patent- und Rechtsanwälte**
**Theresienhöhe 13**
**80339 München (DE)**

(56) Entgegenhaltungen:
**EP-A- 0 725 100     EP-A- 1 227 131**
**EP-A- 1 847 569     WO-A-2007/087896**

**Beschreibung**

Die Erfindung betrifft Polyamidformmassen zur Herstellung von unlackierten Formteilen mit hochglänzender Oberfläche und ausgezeichneter Zähigkeit. Durch Formteile, die aus den erfindungsgemäßen Formmassen mit sehr hoher Oberflächenqualität hergestellt sind, können die aufwändigen, kostenintensiven und häufig umweltbelastenden Lackier-Prozesse vermieden werden.

Gegenstände des täglichen Bedarfs, wie beispielsweise Mobiltelefone, MP3-Player, Sonnenbrillen, Fotoapparate, Ferngläser, GPS Geräte, und viele andere werden mit hochglänzenden Oberflächen hergestellt, die den Wert des Produktes unterstreichen und eine Differenzierung zu low-price Produkten ermöglichen.

Hochwertige Oberflächen werden als Unterstützung einer "High End quality" Positionierung von Autoausstattungen, Haushaltsgeräten, Unterhaltungselektronik, Sportgeräten und leicht zu reinigenden Industrie-Oberflächen eingesetzt.

Reinigbare Oberflächen müssen zusätzlich eine geeignete Kratzfestigkeit und eine hohe chemische Resistenz aufweisen, damit das Aussehen möglichst lange neuwertigen Geräten entspricht.

Gleichzeitig sollen diese Geräte eine hohe Sicherheit gegen Fall, Stoß und Schlag aufweisen und deshalb zähe, schützende Gehäuse besitzen. Damit wird für das Formteil ein Material verlangt, das eine schwierige Eigenschaftskombination von hochglänzender Oberfläche, Zähigkeit und Kratzfestigkeit zeigt.

Zahlreiche Patente beschreiben die Schlagzähmodifizierung von Polyamiden mit verschiedenen Elastomermodifikatoren. Damit kann die Schlagzähigkeit in teilkristallinen Polyamiden verbessert werden.

Die Schlagzähmodifizierung von amorphen Produkten wird seltener verlangt, da die Modifikatoren die Oberflächen stark beeinflussen. Rauhigkeit, Glanz und Homogenität werden stark verschlechtert, so dass Formteile für den Sichtbereich einer Anwendung nicht mehr akzeptiert werden oder lackiert werden müssen.

Amorphe Polyamide ohne Schlagzähmodifikator weisen eine gute Oberfläche auf, erreichen aber keine Kerbschlagzähigkeitswerte von über 15 kJ/m$^2$. Dasselbe gilt für Blends von amorphen und teilkristallinen Polyamiden, bei denen die Oberflächenqualität ebenfalls gut ist, aber die Schlagzähigkeit noch nicht genügt.

Die EP 1 847 569 A1 beschreibt z.B. mit Polyesteramiden

Die EP 1 847 569 A1 beschreibt z.B. mit Polyesteramiden geblendete transparente Polyamide, die eine erhöhte Kerbschlagzähigkeit aufweisen. Glanzwerte sind keine angegeben, und insbesondere die Vergleichsbeispiele mit den Schlagzähmodifikatoren zeigen eine starke Trübung (Haze).

EP 1 227 131 B1 beschreibt eine transparente Polyamidzusammensetzung. In der Formmasse gemäß dieser Druckschrift bildet ein teilkristallines Polyamid die Basis für einen Blend, dessen Kerbschlagzähigkeit mittels Schlagzähmodifikatoren verbessert werden kann. Die Auswirkung auf den Glanz ist allerdings unzureichend.

Auch z.B. in der EP 0 654 505 B1 beschriebene Polyphenylenether enthaltende Formmassen mit Polyamiden, die gegebenenfalls schlagzähmodifiziert sein können, sind dafür bekannt, hinsichtlich der Glanzwerte nicht zufrieden stellende Eigenschaften aufzuweisen.

Weitere Polyamidformmassen sind in der DE 10 2005 023 420 A1, DE 198 21 719 A1 und der EP 1 882 719 A1 beschrieben.

Aus der WO 2007/087 896 A1 ist eine Polyamidformmasse bzw. Copolyamidformmasse sowie die Verwendung einer solchen Polyamidformmasse bzw. Copolyamidformmasse zur Herstellung von heißdampf-sterilisierbaren, transparenten Formteilen und Extrudaten bekannt.

Diese Polyamidformmasse ist dadurch gekennzeichnet, dass sie zumindest ein Copolyamid aus 35-42 Mol-% Bis-(4-amino-3-methyl-cyclohexyl)methan (MACM), 35-42 Mol-% Isophthalsäure (IPS) und 16-30 Mol-% Laurinlactam (LC 12) enthält. Dabei kann MACM bis zu 50 % durch Bis-(4-amino-cyclohexyl)methan (PACM) und IPS bis zu 50 % durch Terephthalsäure (TPS) ersetzt sein. Die Polyamidformmasse kann auch ein Blend aus Copolyamiden oder ein Blend aus Copolyamiden mit Polyamid 12 sein. Die Relative Viskosität (RV) der Polyamidformmasse bzw. Copolyamidformmasse wird in jedem Fall auf einen Wert eingestellt, der größer ist als 1.45. Aus solchen Polyamidformmassen bzw. Copolyamidformmassen hergestellte, den transparenten Formteilen und Extrudaten in ihrer Zusammensetzung entsprechende, heißdampf-sterilisierbare und transparente Normprüfkörper weisen einen Reißdehnungswert auf, der nach dem Erdauern von mindestens 140 und speziell bevorzugt von mindestens 350 heißdampf-Sterilisationszyklen über der Streckgrenze liegt.

Ausgehend von den im Stand der Technik erwähnten Nachteilen ist es Aufgabe der vorliegenden Erfindung, eine Polyamidformmasse sowie hieraus gebildete Formkörper bereitzustellen, die exzellente Glanzwerte bei gleichzeitig hoher Kerbschlagzähigkeit aufweist.

Diese Aufgabe wird bezüglich der Polyamidformmasse mit den Merkmalen des Patentanspruchs 1 sowie bezüglich der Formkörper mit den Merkmalen des Anspruchs 16 gelöst. Mit Patentanspruch 19 werden Verwendungszwecke der Polyamidformmasse genannt. Dabei stellen die abhängigen Ansprüche vorteilhafte Weiterbildungen dar.

Erfindungsgemäß wird somit eine Polyamidformmasse bereitgestellt, enthaltend

a) 95 bis 51 Gew.-% eines amorphen Copolyamids der Formel

**PA (MACMI)l/(MACMT)m/(12)n**

mit einem MACMI-Anteil l im Copolyamid im Bereich von 5 bis 95 Gew.-%, MACMT-Anteil m im Bereich von 0 bis 90 Gew.-% und LC12-Anteil n im Bereich von 5 bis 60 Gew.-%, wobei die Summe dieser drei Anteile im Copolyamid a) 100 Gew.-% beträgt,

b) 5 bis 49 Gew.-% eines amorphen oder mikrokristallinen oder teilkristallinen Polyamids der Formel

**PA (MACMX)x/(PACMY)y/(MXDU)u/(LCZ)z**

wobei die Anteile x, y, u und z der vier Monomergruppen jeweils zwischen 0 und 100 Gew.-% liegen, die Summe dieser vier Anteile im Polyamid b) 100 Gew.-% beträgt; X, Y und U Dicarbonsäuren, ausgewählt aus der Gruppe bestehend aus DC4, DC6, DC9, DC10, DC11, DC12, DC13, DC14, DC15 bis DC36, und LCZ Lactame oder entsprechende Aminocarbonsäuren ausgewählt aus der Gruppe bestehend aus LC4, LC6, LC11 und LC12 bedeuten,

c) 1 bis 30 Gew.-% mindestens eines Kern-Schale-Schlagzähmodifikators, sowie

d) 0 bis 80 Gew.-% mindestens eines Additivs,

wobei die Summe der Komponenten a), b), c) und d) 100 Gew.-% beträgt.

Die verwendeten Schreibweisen und Abkürzungen entsprechen der international üblichen Polyamid-Nomenklatur gemäss ISO 1874-1 (1992). Zudem bedeutet die Abkürzung DC Dicarbonsäure (mit der Anzahl C-Atome) und LC Lactam (mit der Anzahl C-Atome). In der PA-Bezeichnung selbst wird aber im konkreten Fall jeweils nur die Zahl für die Anzahl C-Atome des entsprechenden DC- oder LC-Monomers geschrieben.

Die erfindungsgemäßen Formmassen erfüllen die Aufgabenstellung und zeichnen sich überdies durch einen geringen Verzug daraus hergestellter Formkörper sowie durch weitere Eigenschaften wie ausgezeichnete Kratzfestigkeit, eine hohe Glasumwandlungstemperatur Tg und hohe chemische Resistenz aus.

Besonders verzugsarme Formkörper sind herstellbar aus Formmassen mit einem Überschuss von amorphem Copolyamid a) gegenüber dem Polyamid b). Gemäß den Ansprüchen 2 und 3 enthalten solche bevorzugten Polyamidformmassen einen Anteil des amorphen Copolyamids a) von 85 bis 51 Gew.-%, bevorzugt von 80 bis 51 Gew.-% und einen Anteil des Polyamids b) von 10 bis 49 Gew.-%, bevorzugt von 15 bis 49 Gew.-%.

Die Zähigkeit der erfindungsgemäßen Formmassen wird mit Schlagzähmodifikatoren c) erhöht, die erfindungsgemäß vom Kern-Schale-Typ sind. Besonders bevorzugt ist ein Kern-Schale-Schlagzähmodifikator auf Basis von Methacrylaten, Butadien und Styrol (MBS-Copolymer) entsprechend Anspruch 10. Ein derartiger Kern-Schale-Schlagzähmodifikator ist beispielsweise unter dem Handelsnamen Paraloid BTA 753 bei der Firma Rohm and Haas erhältlich.

Eine wichtige Rolle nimmt das Polyamid b) ein. Die Erkenntnis der Erfinder ist, dass sein Zusatz zu einer Mischung aus Polyamid a) und Schlagzähmodifikator c) sowohl den Glanz als auch die Schlagzähigkeit erhöht. Dies ermöglicht den erfinderischen Spielraum, beide Anforderungen gleichzeitig zu erfüllen, auch wenn Schlagzähmodifikatortypen verwendet werden, die den Glanz stärker beeinträchtigen als die Kern-Schale-Typen, dafür aber in der Funktion der Schlagzähmodifizierung wirksamer sind.

Die Erfindung erreicht deshalb auch mit üblichen Schlagzähmodifikatoren, wie Tafmer (ein säuremodifiziertes Ethylen-$\alpha$-Olefin-Copolymer) und Lotader (ein Ethylen-Glycidylmethacrylsäure-Polymer), welche den Glanz stärker mindern, gleichzeitig genügend hohe Werte im Glanz und in der Schlagzähigkeit, wenn man bei den üblichen, stärker wirksamen Schlagzähmodifikatoren die Zusatzmenge reduziert, z.B. auf 2 bis 5 Gew.-%. Dies kann anhand der Vergleichsbeispiele und Beispiele (vgl. Tabelle 1) nachvollzogen werden. Bei den Beispielen, die Tafmer und Lotader verwenden, fällt auf, dass diese in der Funktion als Schlagzähmodifikatoren sehr wirksam sind und bei einer Zusatzmenge von 10 Gew.-% Kerbschlagzähigkeiten von ca. 35 bis 40 kJ/m$^2$ erzielt werden. Deren Zusatzmenge kann also problemlos auf die Hälfte oder weniger gesenkt werden, wodurch sich immer noch Schlagzähigkeiten von ca. 15 kJ/m$^2$ oder mehr ergeben. Andererseits geht aus dem Vergleichsbeispiel 1 hervor, dass man ganz ohne Schlagzähmodifikator den geforderten Glanzwert weit übertrifft (93 %), womit jedoch eine unzulängliche Schlagzähigkeit einhergeht. Aus diesen zwei Erkenntnissen kann annähernd linear interpoliert werden, dass die Zusatzmenge an üblichen Schlagzähmodifikatoren knapper bemessen werden kann, so dass die Schlagzähigkeit zwar ausreichend hohe Werte annimmt, aber gleichzeitig der Glanzwert nicht unter 50 % fällt.

Einsetzbare Schlagzähmodifikatoren sind solche ausgewählt aus der Gruppe der Ethylen-α-Olefin-Copolymere, der Ethylen-Glycidylmethacrylsäure-Polymere und/oder der Kern-Schale-Schlagzähmodifikatoren, wobei letztere erfindungsgemäß sind, in Frage. Diese Schlagzähmodifikatoren zeichnen sich dadurch aus, dass nur eine minimale Beeinträchtigung des Oberflächenglanzes erfolgt, wodurch schlagzähe und gleichzeitig hoch glänzende Formmassen mit diesbezüglich jeweils exzellenten Werten zugänglich sind.

Ein besonders zu bevorzugender Schlagzähmodifikator ist wie schon erwähnt ein Methacrylat-Butadien-Styrol (MBS)- Kern-Schale-Schlagzähmodifikator. Derartige Schlagzähmodifikatoren sind z.B. in der EP 1 847 569 A1 oder der WO 2007/076108 A1 oder der US 2006/0293438 A1 genannt. Weitere Druckschriften, die den Aufbau sowie die chemische Struktur der zu bevorzugenden Kern-Schale-Schlagzähmodifikatoren angeben, sind z.B. die US 6,869,497 B2, die EP 0 208 187 B1 oder die EP 0 654 505 B1. Dabei ist zu betonen, dass jeder dieser Druckschriften andere als oben genannte Aufgaben zu Grunde liegen und sich die erfindungsgemäße Lösung aus keiner der Druckschriften ableiten lässt.

Für hochwertige Oberflächen wird ein Glanzwert von mindestens 50 % verlangt, gemessen unter dem Winkel von 20°. Diese Werte werden von der erfindungsgemäßen Formmasse erreicht.

In einer bevorzugten Ausführungsform ist vorgesehen, dass beim Copolyamid a) der Mengenanteil des Lactams zwischen 10 bis 50 Gew.-%, bevorzugt zwischen 15 und 45 Gew.-% beträgt.

Weiterhin ist die Möglichkeit gegeben, dass beim Copolyamid a) MACM ganz oder teilweise ersetzt ist durch Diamine, ausgewählt aus der Gruppe bestehend aus PACM, HMD, MXD, NBD, IPD und/oder BAC.

MACM steht für die ISO-Bezeichnung Bis-(4-amino-3-methyl-cyclohexyl)-methan, welches auch als 3,3'-Dimethyl-4,4'-diaminodicyclohexylmethan bezeichnet wird und als Handelsprodukt Laromin C260-Typ (CAS Nr. 6864-37-5), bevorzugt mit Schmelzpunkt zwischen -10°C und 0°C, kommerziell erhältlich ist.

PACM steht für die ISO-Bezeichnung Bis-(4-aminocyclohexyl)-methan, welches auch als 4,4'-Diaminodicyclohexylmethan bezeichnet wird und im Handel als Dicycan-Typ (CAS Nr. 1761-71-3), bevorzugt mit Schmelzpunkt zwischen 30°C und 45°C, kommerziell erhältlich ist.

HMD ist die Abkürzung für Hexamethylendiamin. MXD steht für Meta-Xylylendiamin. NBD ist die Abkürzung für Norbornandiamin. IPD heisst Isophorondiamin, und BAC steht für Bisaminocyclohexan.

Die meisten dieser Abkürzungen für Monomere sind übrigens in der schon vorgängig zitierten Norm ISO 1874-1 (1992) auf der letzten Seite aufgeführt.

In einer weiteren vorteilhaften Ausführungsform ist das Copolyamid a) ein PA MACMI/12 und weist einen MACMI-Anteil im Copolyamid im Bereich von 60 bis 70 Gew.-% und einen LC12-Anteil im Bereich von 30 bis 40 Gew.-% auf.

Alternativ hierzu ist es in einer weiteren bevorzugten Ausführungsform möglich, dass das Copolyamid a) ein PA MACMI/12 ist und einen MACMI-Anteil im Copolyamid im Bereich von 75 bis 85 Gew.-% und einen LC12-Anteil im Bereich von 15 bis 25 Gew.-% aufweist.

Als weitere bevorzugte Alternative ist es ebenso möglich, dass das Copolyamid a) einen

- MACMI-Anteil im Copolyamid im Bereich von 30 bis 45 Gew.-%, einen
- MACMT-Anteil im Bereich von 30 bis 45 Gew.-% und einen
- LC12-Anteil im Bereich von 40 bis 10 Gew.-% aufweist,

wobei diese drei Anteile im Copolyamid zusammen 100 Gew.-% betragen.

Dabei steht I für Isophthalsäure, T für Terephthalsäure und LC12 für Lactam 12 (=Laurinlactam).

Die Formel für das Polyamid b) umfasst eine Spannweite, die von Homopolyamiden bis zu verschiedenen Copolyamiden (binäre, ternäre und quaternäre) reicht, die für die Erfindung geeignet sind. Bevorzugt ist das Polyamid b) ausgewählt aus der Gruppe bestehend aus PA 12 und/oder PA MACM 12. PA 12 erhält man aus der Formel für b), wenn x, y und u = Null sind, und Z=12. PA MACM 12 ergibt sich aus der Formel für b), wenn y, u und z = Null sind, und X=DC12. Der ausgeschriebene Name für DC12 ist Dodecandisäure.

Der Gewichtsanteil des Copolyamids a) an der Formmasse beträgt von 95 bis 51 Gew.-% (wie schon weiter oben erwähnt), bevorzugt von 85 bis 51 Gew.-%, besonders bevorzugt von 80 bis 51 Gew.-%.

Der Gewichtsanteil des Polyamids b) an der Formmasse beträgt 5 bis 49 Gew.-%, bevorzugt von 10 bis 49 Gew.-%, besonders bevorzugt von 15 bis 49 Gew.-% beträgt.

Vorteilhafte Eigenschaften der Polyamidformmasse ergeben sich ferner, wenn der Gewichtsanteil des mindestens einen Kern-Schale-Schlagzähmodifikators c) von 2 bis 25 Gew.-%, bevorzugt von 3 bis 20 Gew.-% beträgt.

Ebenso ist es vorteilhaft, wenn der Gewichtsanteil des mindestens einen Additivs d) von 0 bis 50 Gew.-%, bevorzugt 0 bis 10 Gew.-% beträgt. Bevorzugte Additive sind dabei z.B. Verstärkungsfasern (z.B. Glasfasern), Regler, Katalysatoren, Mineralien, optische Aufheller, Stabilisatoren, Gleitmittel, Einschlussverminderer, Farbpigmente, Farbstoffe, Haftvermittler, Ruß und/oder Leitfähigkeitsverbesserer, wobei diese Auflistung lediglich beispielhafter Natur ist und nicht beschränkend zu verstehen ist. Als Regler bei der Polyamidherstellung können z.B. Benzoesäure, Triacetondiamin und/oder Essigsäure eingesetzt werden. Katalysatoren sind z.B. $H_3PO_2$ oder $H_3PO_3$. Als Stabilisatoren kommen insbesondere Hitze- und/oder UV-Stabilisatoren in Frage. Diese Stabilisatoren werden z.B. unter den Handelsnamen Irganox®, Hostanox®, Tinuvin® oder Nylostab® vertrieben. Als optische Aufheller können z.B. Aufheller wie Tinopal® DMSX oder AMS-GX(Ciba) oder Uvitex® OB (Ciba) eingesetzt werden.

Durch Ruß kann einerseits eine Schwarzfärbung der Formmasse sowie bei entsprechender Menge gleichzeitig eine Erhöhung der elektrischen Leitfähigkeit erreicht werden. Durch letzteres können z.B. elektrostatische Aufladungen vermieden werden.

Die Additive können sowohl vor oder während des Polymerisationsprozesses der Reaktionsmasse zugesetzt werden, als auch nachträglich z.B. durch Extrusion (Compoundierung) in die Formmasse eingearbeitet werden. Insbesondere durch den Zusatz von Gleitmitteln ist dabei (neben der Erhöhung der Fliessfähigkeit) eine weitere Steigerung der Kratzfestigkeit erzielbar, was der Formmasse bzw. den daraus hergestellten Formkörpern neben der hohen Schlagzähigkeit und dem hohen Glanz eine weitere vorteilhafte Eigenschaft verleiht.

Die vorteilhaften Eigenschaften der erfindungsgemäßen Polyamidformmasse kommen dadurch zum Ausdruck, dass die Oberfläche einer Prüfplatte einen Glanzwert, gemessen unter einem Winkel von 20° (nach ISO 2813) von mindestens 50 %, bevorzugt von mindestens 60 %, besonders bevorzugt von mindestens 70 % aufweist. Gleichzeitig zeigt dabei die Polyamidformmasse eine hohe Kerbschlagzähigkeit nach Charpy, wobei diese gemessen an einem entsprechenden Prüfkörper bei 23 °C (nach ISO 179/2-1 eA (Charpy)), mindestens 15 kJ/m$^2$, bevorzugt mindestens 16 kJ/m$^2$ beträgt.

Erfindungsgemäß werden ebenso Formkörper aus der zuvor beschriebenen Polyamidformmasse bereitgestellt. Diese Formkörper zeichnen sich insbesondere dadurch aus, dass die vorteilhaften Eigenschaften der Polyamidformmasse zum Tragen kommen: Durch den hohen Glanzwert sowie die hohe Kerbschlagzähigkeit wird dadurch eine Lakkierung unnötig. Insbesondere sind die Formkörper ausgewählt aus der Gruppe bestehend aus Sichtteilen und/oder sichtbaren Gehäusen. Die Formkörper können dabei auf beliebige Weise hergestellt werden, z.B. durch Spritzgießen oder Spritzprägen, oder durch Hinterspritzen von Folien aus erfindungsgemäßen Formmassen, oder durch Extrudieren, oder Extrusionsblasformen. Ebenso ist eine Weiterbearbeitung der Formkörper, wie z.B. Fräsen, Bohren, Schleifen, Lasermarkieren, -schweißen oder -schneiden möglich. Eine Einfärbung z.B. in Tauchbädern ist ebenso denkbar. Als Formkörper kommen ebenso aus der Formmasse hergestellte Folien in Frage, wie z.B. Flach-, Blas-, Gieß- oder Mehrschichtfolien, die z.B. über Verfahren wie Kaschieren, Recken, Verstrecken u.ä. Prozesse nachbearbeitet werden können. Ein Bedrucken oder Färben der Folie ist ebenso möglich.

Erfindungsgemäße Verwendungszwecke der Formmasse sind beispielsweise Verwendungsmöglichkeiten für Telefone, Mobiltelefone, MP3-Player, Verkleidungen, Gehäuse, Brillengestelle, Brillenrahmen, Sonnenbrillen, Fotoapparate, Ferngläser, GPS-Geräte, dekorative Gegenstände, Schutzfolien, Einrichtungsgegenstände, Kfz-Teile, Sensorgehäuse, Messgeräte, Musik-Geräte, TV-Geräte, Navigationsgeräte, Armbanduhren, Spielcomputer, Spielkonsolen, PCs, Bedienungstasten, Blenden oder Manipulationsfelder, Griffe, Behälter, Flaschen, Boxen, Rohre oder Profile, Sichtteile und/oder sichtbare Gehäuse, also prinzipiell Formteile, die permanentem Gebrauch ausgesetzt sind und dabei ihre Schutzfunktion und ein hochwertiges Aussehen bewahren sollen.

Die vorliegende Erfindung wird anhand der nachfolgenden beispielhaften Zusammensetzungen sowie anhand von Vergleichsversuchen verdeutlicht. Aus der Tabelle 1 ist ersichtlich, dass mit Formmassen, die lediglich aus einem bestimmten Polyamid gebildet sind, ein gleichzeitiges Erreichen vorteilhafter Glanzwerte und vorteilhafter Kerbschlagzähigkeit nicht möglich ist (Vergleichsbeispiele 1 bis 3). Es fällt insbesondere auf, dass übliche Schlagzähmodifikatoren wie Tafmer oder Lotader bei einem Mengenanteil von 10 Gew.-% (der zum Ziel der Schlagzähmachung regelmäßig angewandt wird) den Glanzwert massiv herabsetzen, andererseits aber sehr hohe Kerbschlagzähigkeiten ergeben (Vergleichsbeispiele 2 und 3). Bei der weiteren Entwicklung wurde in den nächsten Versuchen erstaunlicherweise gefunden, dass sich sowohl der Glanz als auch die Kerbschlagzähigkeit ausgehend von einem schlagzäh modifizierten Polyamid a) erhöhen, wenn der Formmasse ein zweites Polyamid b) zugemischt wird. Dieser Fortschritt ist ersichtlich, wenn man die Vergleichsbeispiele 4 bzw. 6 mit dem Vergleichsbeispiel 2 vergleicht, und analog auch zwischen dem Vergleichsbeispiel 5 und dem Vergleichsbeispiel 3. Erstaunlicherweise konnte nun weiter gefunden werden, dass sich Formmassen mit exzellenten Glanzwerten und gleichzeitig hoher Kerbschlagzähigkeit erhalten lassen, d.h. das gewünschte Eigenschaftsprofil durch eine weitere Abstimmung so optimiert werden konnte, dass das Ziel der Erfindung erreicht wurde. Dies gelang unter Beibehaltung des zweiten Polyamids b), indem bei den Beispielen 1 und 2 wiederum in einem Mengenanteil von 10 Gew.-% ein ausgewählter anderer Schlagzähmodifikator eingesetzt wurde, der eine geringere aber dennoch ausreichende Kerbschlagzähigkeit ergab, hingegen den Glanz weniger beeinträchtigte als die anderen beiden Schlagzähmodifikatoren. Damit wurde ein Glanzniveau von ca. 70 % erzielt. Völlig überraschend war hierbei, dass ausgerechnet ein Kern-Schale-Schlagzähmodifikator für diesen Zweck optimal ist. Wie schon weiter vorn in der Beschreibung erläutert, ermöglicht aber der durch das zweite Polyamid b) gewonnene Spielraum, auch andere übliche Schlagzähmodifikatoren erfindungsgemäß, d.h. unter Erfüllung beider Anforderungen, einzusetzen, indem deren Mengenanteil geringer eingestellt wird.

In Tabelle 2 ist die Zusammensetzung für das in Tabelle 1 genannte und für die Versuche als Polyamid a) verwendete Grilamid® TR 60 angegeben. Dabei handelt es sich um ein Copolyamid, das in den Bereich des Anspruchs 8 fällt. Das Diamin MACM teilt sich dabei auf die beiden Dicarbonsäuren I und T auf (23 Gew.-% zum I und 22 Gew.-% zum T), sodass, wenn man es wie in Anspruch 8 ausdrückt, der MACMI-Anteil 39 Gew.-% und der MACMT-Anteil 37 Gew.-% beträgt. Zudem beträgt der LC12-Anteil in diesem Copolyamid 24 Gew.-%, womit die Summe der Anteile 100 Gew.-% ergibt.

Tafmer MC-201 (der Firma Mitsui) ist eine Schlagzähmodifikator-Mischung aus mit Maleinsäureanhydrid gepfropften Ethylen-Propylen- und Ethylen-Butylen-Copolymeren.

Lotader GMA AX8840 ist ein Schlagzähmodifikator aus Polyethylencopolymer mit 8 Gew.-% Glycidylmethacrylat der Firma Arkema (FR).

Paraloid BTA 753 ist ein Kern-Schale-Schlagzähmodifikator auf Basis von Methacrylaten, Butadien und Styrol (MBS-Copolymer) der Firma Rohm and Haas.

Russ wurde in der Form eines von der Firma EMS-CHEMIE AG hergestellten Masterbatches (Konzentrat) eingebracht (wie in der Tabelle 1 angegeben), um die Formmasse schwarz einzufärben, so dass nachher der reine Oberflächenglanz gemessen werden konnte, ohne Beeinflussung durch Reflexion von tieferen Materialschichten oder von der gegenüberliegenden Oberfläche der 2 mm dicken Prüfplatte.

**Patentansprüche**

1. Polyamidformmasse, enthaltend

    a) 95 bis 51 Gew.-% eines amorphen Copolyamids der Formel

$$\text{PA (MACMI)l/(MACMT)m/(12)n}$$

    mit einem MACMI-Anteil l im Copolyamid im Bereich von 5 bis 95 Gew.-%, MACMT-Anteil m im Bereich von 0 bis 90 Gew.-% und LC12-Anteil n im Bereich von 5 bis 60 Gew.-%, wobei die Summe dieser drei Anteile im Copolyamid a) 100 Gew.-% beträgt,
    b) 5 bis 49 Gew.-% eines amorphen oder mikrokristallinen oder teilkristallinen Polyamids der Formel

$$\text{PA (MACMX)x/(PACMY)y/(MXDU)u/(LCZ)z}$$

    wobei die Anteile x, y, u und z der vier
    Monomergruppen jeweils zwischen 0 und 100
    Gew.-% liegen, die Summe dieser vier Anteile im Polyamid b) 100 Gew.-% beträgt; X, Y und U Dicarbonsäuren, ausgewählt aus der Gruppe bestehend aus DC4, DC6, DC9, DC10, DC11, DC12, DC13, DC14, DC15 bis DC36, und LCZ Lactame
    oder entsprechende Aminocarbonsäuren ausgewählt aus der Gruppe bestehend aus LC4, LC6,
    LC11 und LC12 bedeuten,
    c) 1 bis 30 Gew.-% mindestens eines Kern-Schale-Schlagzähmodifikators, sowie
    d) 0 bis 80 Gew.-% mindestens eines Additivs,
    wobei die Summe der Komponenten a), b), c) und d) 100.Gew.-% beträgt.

2. Polyamidformmasse nach Anspruch 1, **dadurch gekennzeichnet, dass** das amorphe Copolyamid a) in einem Anteil von 85 bis 51 Gew.-% enthalten ist.

3. Polyamidformmasse nach einem der vorhergehenden Ansprüche, **dadurch gekennzeichnet, dass** das Polyamid b) in einem Anteil von 10 bis 49 Gew.-% enthalten ist.

4. Polyamidformmasse nach einem der vorhergehenden Ansprüche, **dadurch gekennzeichnet, dass** beim Copolyamid a) der Mengenanteil des Lactams zwischen 10 bis 50 Gew.-% beträgt.

5. Polyamidformmasse nach einem der vorhergehenden Ansprüche, **dadurch gekennzeichnet, dass** beim Copolyamid a) MACM ganz oder teilweise ersetzt ist durch Diamine, ausgewählt aus der Gruppe bestehend aus PACM, HMD, MXD, NBD, IPD und/oder BAC.

6. Polyamidformmasse nach einem der Ansprüche 1 bis 4, **dadurch gekennzeichnet, dass** das Copolyamid a) ein PA MACMI/12 ist und einen MACMI-Anteil im Copolyamid im Bereich von 60 bis 70 Gew.-% und einen LC12-Anteil im Bereich von 30 bis 40 Gew.-% aufweist.

7. Polyamidformmasse nach einem der Ansprüche 1 bis 4, **dadurch gekennzeichnet, dass** das Copolyamid a) ein PA MACMI/12 ist und einen MACMI-Anteil im Copolyamid im Bereich von 75 bis 85 Gew.-% und einen LC12-Anteil im Bereich von 15 bis 25 Gew.-% aufweist.

8. Polyamidformmasse nach einem der Ansprüche 1 bis 4, **dadurch gekennzeichnet, dass** das Copolyamid a) einen

   - MACMI-Anteil im Copolyamid im Bereich von 30 bis 45 Gew.-%, einen
   - MACMT-Anteil im Bereich von 30 bis 45 Gew.-% und einen
   - LC12-Anteil im Bereich von 40 bis 10 Gew.-% aufweist,
   wobei diese drei Anteile im Copolyamid zusammen 100 Gew.-% betragen.

9. Polyamidformmasse nach einem der vorhergehenden Ansprüche, **dadurch gekennzeichnet, dass** das zweite Polyamid b) ausgewählt ist aus der Gruppe bestehend aus PA 12 und/oder PA MACM 12.

10. Polyamidformmasse nach einem der vorhergehenden Ansprüche, **dadurch gekennzeichnet, dass** der Kern-Schale-Schlagzähmodifikator c) ein Methacrylat-Butadien-Styrol (MBS)-Kern-Schale-Schlagzähmodifikator ist.

11. Polyamidformmasse nach einem der vorhergehenden Ansprüche, **dadurch gekennzeichnet, dass** der Gewichtsanteil des mindestens einen Schlagzähmodifikators c) von 2 bis 25 Gew.-% beträgt.

12. Polyamidformmasse nach einem der vorhergehenden Ansprüche **dadurch gekennzeichnet, dass** der Gewichtsanteil des mindestens einen Additivs d) von 0 bis 50 Gew.-% beträgt.

13. Polyamidformmasse nach einem der vorhergehenden Ansprüche, **dadurch gekennzeichnet, dass** die Oberfläche einer Prüfplatte einen Glanzwert, gemessen unter einem Winkel von 20° (nach ISO 2813) von mindestens 50 %, bevorzugt von mindestens 60 %, besonders bevorzugt von mindestens 70 % aufweist.

14. Polyamidformmasse nach einem der vorhergehenden Ansprüche, **dadurch gekennzeichnet, dass** die Kerbschlagzähigkeit (notched impact Charpy) eines Prüfkörpers, gemessen bei 23°C (nach ISO 179/2-1 eA (Charpy)), mindestens 15 kJ/m$^2$ , bevorzugt mindestens 16 kJ/m$^2$ beträgt.

15. Formkörper, herstellbar aus einer Polyamidformmasse nach einem der vorhergehenden Ansprüche.

16. Formkörper nach vorhergehendem Anspruch, **dadurch gekennzeichnet, dass** er unlackiert ist.

17. Formkörper nach einem der beiden vorhergehenden Ansprüche, ausgewählt aus der Gruppe bestehend aus Sichtteilen und/oder sichtbaren Gehäusen.

18. Verwendung einer Polyamidformmasse nach einem der Ansprüche 1 bis 14 für Telefone, Mobiltelefone, MP3-Player, Verkleidungen, Gehäuse, Brillengestelle, Brillenrahmen, Sonnenbrillen, Fotoapparate, Ferngläser, GPS-Geräte, dekorative Gegenstände, Schutzfolien, Einrichtungsgegenstände, Kfz-Teile, Sensorgehäuse, Messgeräte, Musik-Geräte, TV-Geräte, Navigationsgeräte, Armbanduhren, Spielcomputer, Spielkonsolen, PCs, Bedienungstasten, Blenden oder Manipulationsfelder, Griffe, Behälter, Flaschen, Boxen, Rohre oder Profile, Sichtteile und/oder sichtbare Gehäuse.
Tabelle 1

| Rezepturen (Anteile in Gew.-%) | Bedingung | Zustand | Einheit | Vergleichsbeispiel 1 | Vergleichsbeispiel 2 | Vergleichsbeispiel 3 | Vergleichsbeispiel 4 | Vergleichsbeispiel 5 | Vergleichsbeispiel 6 | Beispiel 1 | Beispiel 2 |
|---|---|---|---|---|---|---|---|---|---|---|---|
| GRILAMID TR60 nat. (Polyamid a)) | | | | 99 | 89 | 89 | 69 | 69 | 69 | 69 | 69 |
| MB L20 schwarz (PA 12 mit 25 Gew.-% Ruß) | | | | 1 | 1 | 1 | 1 | 1 | 1 | 1 | 1 |
| TAFMER MC201 (Schlagzähmodifikator c)) | | | | | 10 | | 10 | | 10 | | |
| LOTADER GMA AX8840 (Schlagzähmodifikator c)) | | | | | | 10 | | 10 | | | |
| PARALOID BTA753 (Schlagzähmodifikator c)) | | | | | | | | | | 10 | 10 |
| GRILAMID TR90 nat. (PA MACM 12) (Polyamid b)) | | | | | | | 20 | 20 | | 20 | |
| GRILAMID L20 nat. (PA 12) (Polyamid b)) | | | | | | | | | 20 | | 20 |
| Prüfplatte 2 mm dick, Oberfläche | | | | | | | | | | | |
| Glanzwert | 20° | trocken | % | 93 | 4 | 6 | 8 | 26 | 40 | 69 | 76 |
| Basisdaten (thermisch) | | | | | | | | | | | |
| Tg | - | trocken | °C | 190 | 190 | 189 | 181 | 179 | 163 | 178 | 163 |

(fortgesetzt)

| Basisdaten (thermisch) | | | | | | | | | | | |
|---|---|---|---|---|---|---|---|---|---|---|---|
| Schmelzpunkt | - | trocken | °C | - | - | 101 | - | 101 | 175 | - | 174 |
| Schmelzenthalpie | - | trocken | J/g | - | - | 4,0 | - | 5,8 | 5,2 | - | 8,1 |
| Mechanik | | | | | | | | | | | |
| Zugmodul | - | trocken | MPa | 2245 | 1770 | 1815 | 1660 | 1690 | 1710 | 1735 | 1765 |
| Kerbschlagzähigkeit Charpy | 23 °C | trocken | kJ/m² | 7,1 | 41,8 | 35,2 | 98,2 | 37,2 | 53,8 | 16,6 | 18,2 |
| Härte an DIN-Zugstab 4 mm dick (gemessen am flächigen Schulterende) | | | | | | | | | | | |
| Kugeldruckhärte | - | trocken | MPa | 146 | 110 | 113 | 105 | 108 | 103 | 112 | 109 |

**Tabelle 2**

| Polyamide Type Grilamid® | | TR 60 |
|---|---|---|
| MACM | Gew.-% | 45 |
| I | Gew.-% | 16 |
| T | Gew.-% | 15 |
| LC12 | Gew.-% | 24 |
| Sum | Gew.-% | 100 |

**Claims**

1. Polyamide moulding compound, comprising

   a) 95 to 51% by weight of an amorphous copolyamide of the formula

   $$PA \, (MACMI)l/MACMT)m/(12)n$$

   having a MACMI proportion I in the copolyamide in the range of 5 to 95% by weight, MACMT proportion m in the range of 0 to 90% by weight and LC12 proportion n in the range of 5 to 60% by weight, the sum of these three proportions in copolyamide a) being 100% by weight,
   b) 5 to 49% by weight of an amorphous or microcrystalline or partially crystalline polyamide of the formula

   $$PA \, (MACMX)x/(PACMY)y/(MXDU)u/(LCZ)z,$$

   the proportions x, y, u and z of the four monomer groups respectively being between 0 and 100% by weight, the sum of these four proportions in polyamide b) being 100% by weight; X, Y and U meaning dicarboxylic acids selected from the group consisting of DC4, DC6, DC9, DC10, DC11, DC12, DC13, DC14, DC15 to DC36, and LCZ meaning lactams or corresponding aminocarboxylic acids selected from the group consisting of LC4, LC6, LC11 and LC12,
   c) 1 to 30% by weight of at least one core-shell impact modifier, and also
   d) 0 to 80% by weight of at least one additive,
   the sum of the components a), b), c) and d) being 100% by weight.

2. Polyamide moulding compound according to claim 1, **characterised in that** the amorphous copolyamide a) is comprised in a proportion of 85 to 51% by weight.

3. Polyamide moulding compound according to one of the preceding claims, **characterised in that** polyamide b) is comprised in a proportion of 10 to 49% by weight.

4. Polyamide moulding compound according to one of the preceding claims, **characterised in that**, in the case of copolyamide a), the quantity proportion of the lactam is between 10 to 50% by weight.

5. Polyamide moulding compound according to one of the preceding claims, **characterised in that**, in the case of copolyamide a), MACM is replaced completely or partially by diamines, selected from the group consisting of PACM, HMD, MXD, NBD, IPD and/or BAC.

6. Polyamide moulding compound according to one of the claims 1 to 4, **characterised in that** copolyamide a) is a PA MACMI/12 and has a MACMI proportion in the copolyamide in the range of 60 to 70% by weight and an LC12 proportion in the range of 30 to 40% by weight.

7. Polyamide moulding compound according to one of the claims 1 to 4, **characterised in that** copolyamide a)

is a PA MACMI/12 and has a MACMI proportion in the copolyamide in the range of 75 to 85% by weight and an LC12 proportion in the range of 15 to 25% by weight.

8. Polyamide moulding compound according to one of the claims 1 to 4, **characterised in that** copolyamide a) has

- a MACMI proportion in the copolyamide in the range of 30 to 45% by weight, a
- MACMT proportion in the range of 30 to 45% by weight and an
- LC12 proportion in the range of 40 to 10% by weight, these three components in the copolyamide together being 100% by weight.

9. Polyamide moulding compound according to one of the preceding claims, **characterised in that** the second polyamide b) is selected from the group consisting of PA 12 and/or PA MACM 12.

10. Polyamide moulding compound according to one of the preceding claims, **characterised in that** the core-shell impact modifier c) is a methacrylate-butadiene-styrene (MBS) core-shell impact modifier.

11. Polyamide moulding compound according to one of the preceding claims, **characterised in that** the weight proportion of the at least one impact modifier c) is from 2 to 25% by weight.

12. Polyamide moulding compound according to one of the preceding claims, **characterised in that** the weight proportion of the at least one additive d) is from 0 to 50% by weight.

13. Polyamide moulding compound according to one of the preceding claims, **characterised in that** the surface of a test plate has a gloss value, measured at an angle of 20° (according to ISO 2813), of at least 50%, preferably of at least 60%, particularly preferred of at least 70%.

14. Polyamide moulding compound according to one of the preceding claims, **characterised in that** the notch impact strength (notched impact Charpy) of a test piece, measured at 23°C (according to ISO 179/2-1 eA (Charpy)), is at least 15 kJ/m$^2$, preferably at least 16 kJ/m$^2$.

15. Moulded article, producible from a polyamide moulding compound according to one of the preceding claims.

16. Moulded article according to the preceding claim, **characterised in that** it is unlacquered.

17. Moulded article according to one of the two preceding claims, selected from the group consisting of visible parts and/or visible housings.

18. Use of a polyamide moulding compound according to one of the claims 1 to 14 for telephones, mobile telephones, MP3 players, coverings, housings, spectacle mountings, spectacle frames, sunglasses, photographic apparatus, binoculars, GPS devices, decorative objects, protective films, items of furniture, automotive vehicle parts, sensor housings, measuring devices, music players, TV sets, navigation devices, wristwatches, games computers, games consoles, PCs, operating keys, screens or manipulation panels, handles, containers, bottles, boxes, tubes or profiles, visible parts and/or visible housings.

**Revendications**

1. Matière à mouler en polyamide, comprenant :

a) 95 à 51 % en poids d'un copolyamide amorphe de formule

$$\text{PA (MACMI)l/(MACMT)m/(12)n}$$

avec une proportion l de MACMI dans le copolyamide dans la plage allant de 5 à 95 % en poids, une proportion m de MACMT dans la plage allant de 0 à 90% en poids et une proportion n de LC12 dans la plage allant de 5 à 60 % en poids, la somme de ces trois proportions dans le copolyamide a) étant de 100 % en poids,

b) 5 à 49 % en poids d'un polyamide amorphe ou microcristallin ou partiellement cristallin de formule

$$PA (MACMX)x/(PACMY)y/(MXDU)u/(LCZ)z$$

les proportions x, y, u et z des quatre groupes de monomères étant à chaque fois comprises entre 0 et 100 % en poids, la somme de ces quatre proportions dans le polyamide b) étant de 100 % en poids ; X, Y et U étant des acides dicarboxyliques choisis parmi le groupe se composant de DC4, DC6, DC9, DC10, DC11, DC12, DC13, DC14, DC15 à DC36, et LCZ étant des lactames ou des acides aminocarboxyliques correspondants choisis parmi le groupe se composant de LC4, LC6, LC11 et LC12,
c) 1 à 30 % en poids d'au moins un modificateur de la résilience noyau-enveloppe, ainsi que
d) 0 à 80% en poids d'au moins un additif,
la somme des composants a), b), c) et d) étant de 100 % en poids.

2. Matière à mouler en polyamide selon la revendication 1, **caractérisée en ce que** le copolyamide amorphe a) y est contenu en une proportion de 85 à 51 % en poids.

3. Matière à mouler en polyamide selon l'une quelconque des revendications précédentes, **caractérisée en ce que** le polyamide b) y est contenu en une proportion de 10 à 49 % en poids.

4. Matière à mouler en polyamide selon l'une quelconque des revendications précédentes, **caractérisée en ce que** pour le copolyamide a) la proportion de lactame est comprise entre 10 et 50 % en poids.

5. Matière à mouler en polyamide selon l'une quelconque des revendications précédentes, **caractérisée en ce que**, pour le copolyamide a) le MACM est remplacé totalement ou partiellement par des diamines choisies parmi le groupe se composant de PACM, HMD, MXD, NBD, IPD et/ou BAC.

6. Matière à mouler en polyamide selon l'une quelconque des revendications 1 à 4, **caractérisée en ce que** le copolyamide a)
est un PA MACMI/12 et présente une proportion de MACMI dans le copolyamide dans la plage allant de 60 à 70% en poids et une proportion de LC12 dans la plage allant de 30 à 40 % en poids.

7. Matière à mouler en polyamide selon l'une quelconque des revendications 1 à 4, **caractérisée en ce que** le copolyamide a)
est un PA MACMI/12 et présente une proportion de MACMI dans le copolyamide dans la plage allant de 75 à 85 % en poids et une proportion de LC12 dans la plage allant de 15 à 25 % en poids.

8. Matière à mouler en polyamide selon l'une quelconque des revendications 1 à 4, **caractérisée en ce que** le copolyamide a) présente

- une proportion de MACMI dans le copolyamide dans la plage allant de 30 à 45 % en poids,
- une proportion de MACMT dans la plage allant de 30 à 45 % en poids et
- une proportion de LC12 dans la plage allant de 40 à 10 % en poids,
ces trois proportions dans le copolyamide s'élevant au total à 100 % en poids.

9. Matière à mouler en polyamide selon l'une quelconque des revendications précédentes, **caractérisée en ce que** le second polyamide b) est choisi parmi le groupe se composant de PA 12 et/ou PA MACM 12.

10. Matière à mouler en polyamide selon l'une quelconque des revendications précédentes, **caractérisée en ce que** le modificateur de la résilience noyau-enveloppe c) est un modificateur de la résilience noyau-enveloppe méthacrylate-butadiène-styrène (MBS).

11. Matière à mouler en polyamide selon l'une quelconque des revendications précédentes, **caractérisée en ce que** la proportion en poids de l'au moins un modificateur de la résilience noyau-enveloppe c) va de 2 à 25 % en poids.

12. Matière à mouler en polyamide selon l'une quelconque des revendications précédentes, **caractérisée en ce que** la proportion en poids de l'au moins un additif d) va de 0 à 50% en poids.

**13.** Matière à mouler en polyamide selon l'une quelconque des revendications précédentes, **caractérisée en ce que** la surface d'une plaque d'essai présente une valeur de brillance, mesurée à un angle de 20° (selon ISO 2813), d'au moins 50 %, de préférence d'au moins 60 %, de manière particulièrement préférée d'au moins 70 %.

**14.** Matière à mouler en polyamide selon l'une quelconque des revendications précédentes, **caractérisée en ce que** la valeur de résilience (notched impact Charpy) d'un échantillon, mesurée à 23 °C (selon ISO 179/2-1 eA (Charpy)), est d'au moins 15 kJ/m$^2$, de préférence d'au moins 16 kJ/m$^2$.

**15.** Corps moulé, pouvant être fabriqué à partir d'une matière à mouler en polyamide selon l'une quelconque des revendications précédentes.

**16.** Corps moulé selon la revendication précédente, **caractérisé en ce qu'**il n'est pas laqué.

**17.** Corps moulé selon l'une quelconque des deux revendications précédentes, choisi parmi le groupe se composant de pièces visibles et/ou les boîtiers visibles.

**18.** Utilisation d'une matière à mouler en polyamide selon l'une quelconque des revendications 1 à 14 pour des téléphones, des téléphones portables, des lecteurs MP3, des revêtements, des boîtiers, des montures de lunettes, des cadres de lunettes, des lunettes de soleil, des appareils photos, des jumelles, des appareils GPS, des objets décoratifs, des feuilles protectrices, des objets d'équipement, des pièces automobiles, des boîtiers de capteur, des appareils de mesure, des appareils de musique, des téléviseurs, des appareils de navigation, des montres, des ordinateurs de jeux, des consoles de jeux, des PC, des boutons de commande, des obturateurs ou des champs de manipulation, des poignées, des récipients, des bouteilles, des boîtes, des tubes ou des profilés, des parties visibles et/ou des boîtiers visibles.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1847569 A1
- EP 1227131 B1
- EP 0654505 B1
- DE 102005023420 A1
- DE 19821719 A1
- EP 1882719 A1
- WO 2007087896 A1
- WO 2007076108 A1
- US 20060293438 A1
- US 6869497 B2
- EP 0208187 B1